# DEMANDE DE BREVET EUROPEEN

(11) **EP 0 661 680 A1**
(43) Date de publication de la demande: **05.07.1995**
(21) Numéro de dépôt: 94200062.1
(22) Date de dépôt: 13.01.1994
(51) Int. Cl.: G09B 15/02

(54) **Matériel pour la présentation de la musique**

(30) Priorité: 31.12.1993 BE 9301491
(71) Demandeur: Pozzo di Borgo, Anne-Marie, Collonges-Bellerive (CH)
(72) Inventeur: Pozzo di Borgo, Anne-Marie, Collonges-Bellerive (CH)
(74) Mandataire: Konings, Lucien Marie Cornelis Joseph

(57) **Abrégé**

La présente invention concerne
un matériel pour la présentation de la musique caractérisé en ce qu'au moins une partie de la musique est visuellement séparée du reste de cette musique au moyen d'une présentation différente.

Particulièrement, mais pas exclusivement pendant l'enseignement de la musique il peut être très important d'avoir la possibilité de disposer de séparations visuelles, par exemple pour séparer la partie de la musique à jouer uniquement au début, de celle qu'on doit jouer fréquemment comme exercice, ou pour signaler ou donner des informations additionnelles à ajouter aux autres instructions.

On peut attirer l'attention par séparation visuelle sur une partie difficile ou sur une partie qu'on doit jouer avec une sensibilité différente.

## Description

La présente invention concerne un matériel pour la présentation de la musique et propose le matériel comme indiqué dans la revendication 1.

Particulièrement, mais pas exclusivement pendant l'enseignement de la musique il peut être très important d'avoir la possibilité de disposer de séparations visuelles, par exemple pour séparer la partie de la musique à jouer uniquement au début, de celle qu'on doit jouer fréquemment comme exercice, ou pour signaler ou donner des informations additionnelles à ajouter aux autres instructions.

On peut attirer l'attention par séparation visuelle sur une partie difficile ou sur une partie qu'on doit jouer avec une sensibilité différente.

Comme modes de réalisation illustratifs et non limitatif de l'objet de l'invention, plusieurs des présentations préférentielles sont décrites ci-après en se référant aux dessins annexés.

Le matériel pour la présentation de la musique peut être un porteur d'information musicale par exemple un tableau de bois, métal, ou autre matière portant au moins une partition de musique.

Les tableaux sont de préférence des dessins sur papier, de préférence des pages d'un livre d'instruction et / ou d'un livre d'exercices. Les dessins peuvent également avoir la forme de dessins sur papier et les caractères peuvent avoir la forme d'une couche de peinture, d'encre ou d'un autre liquide ou d'autocollants.

Le matériel, porteur d'informations musicales, peut être une bande de vidéo, un disque optique, une disquette d'ordinateur, permettant, de reproduire les images des leçons, par exemple les partitions sur l'écran d'un système électronique.

### Exemples:

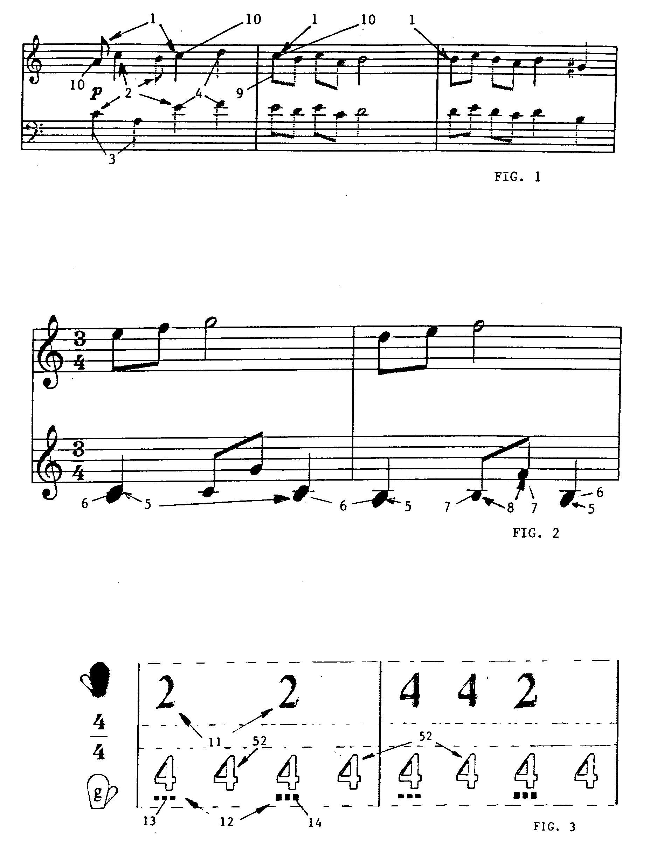

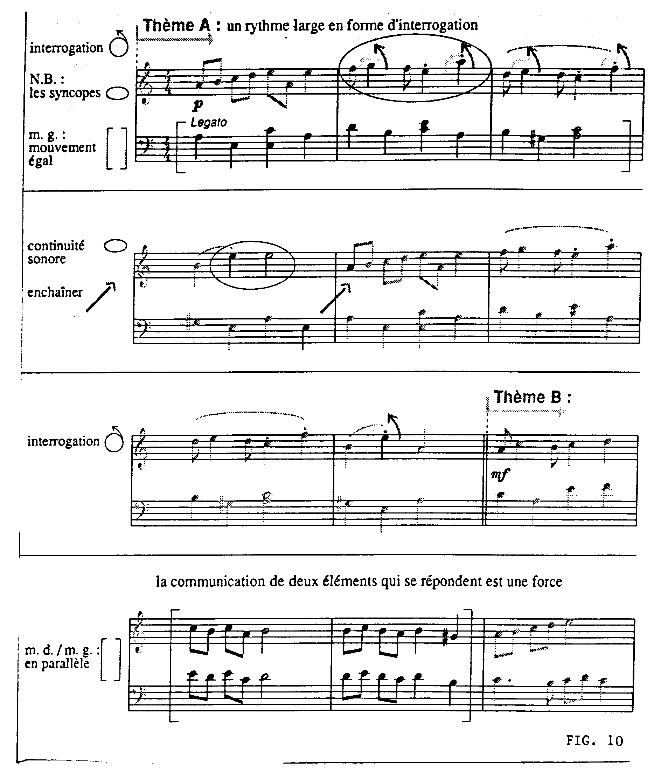

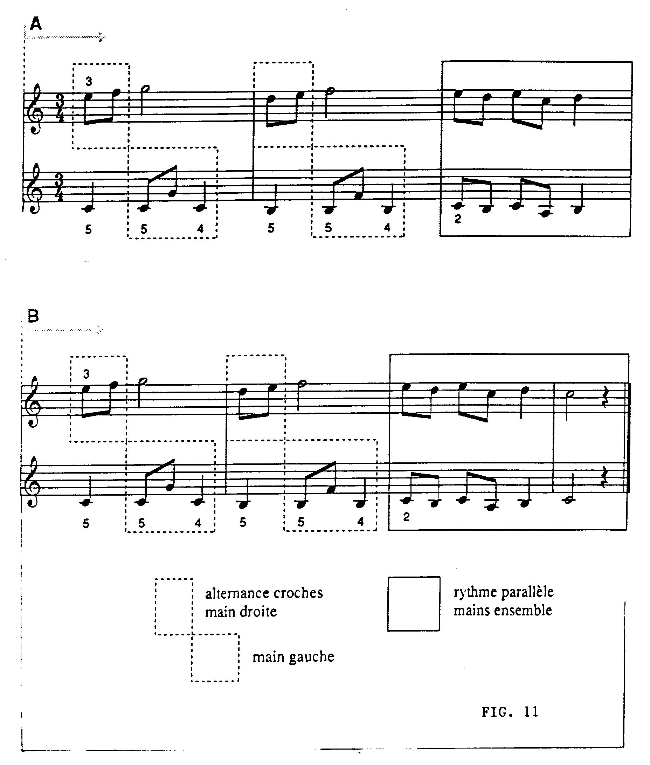

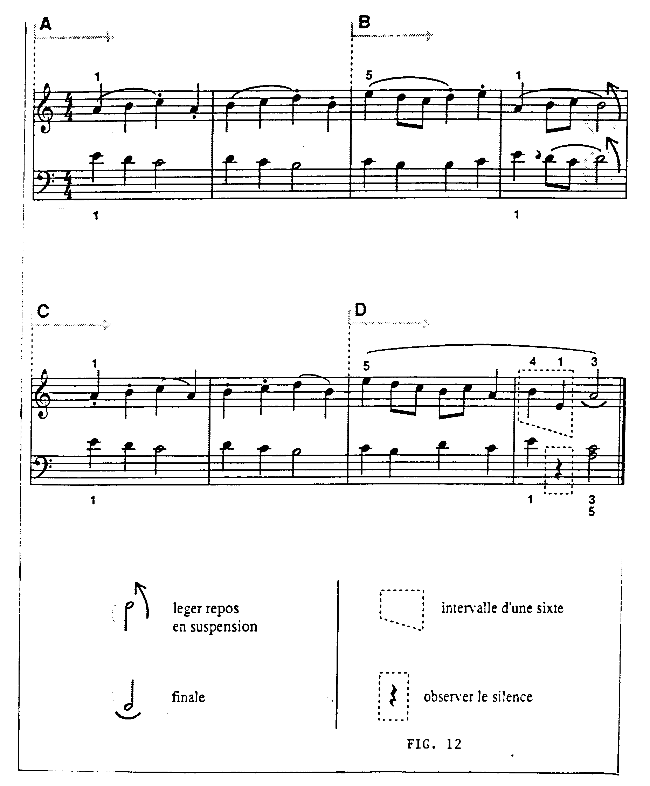

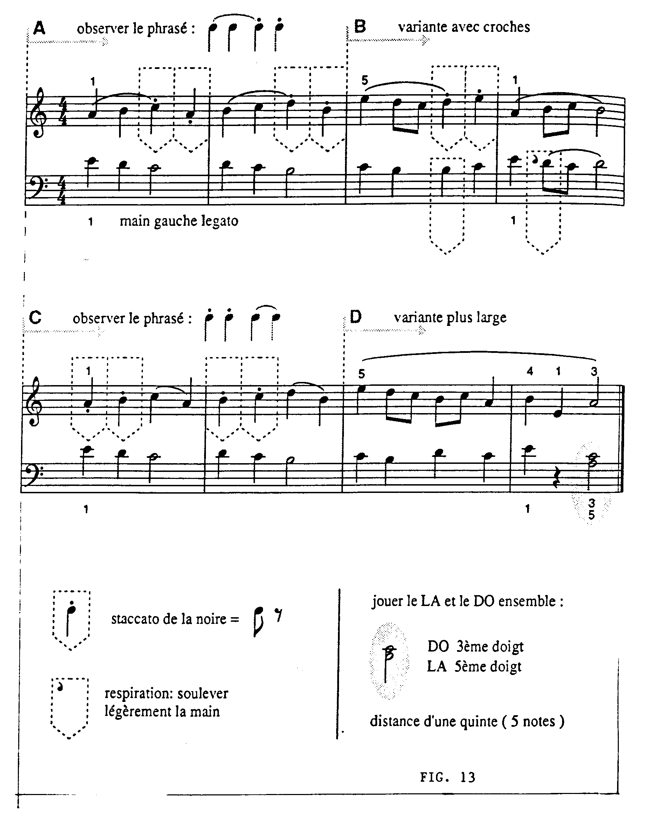

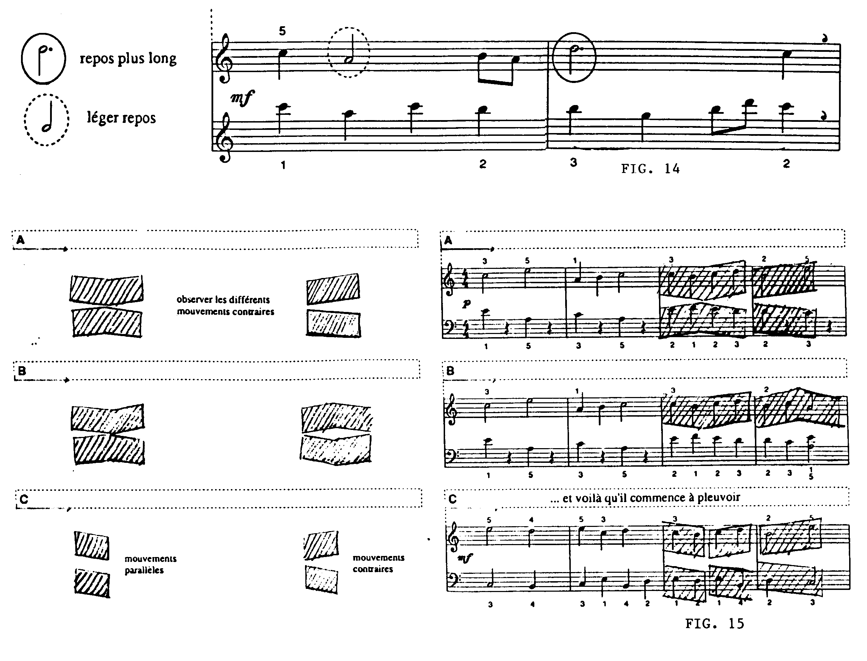

Figures 1-15, - Les dessins présentent des vues sur porteurs d'information musicale par exemple une page d'un livre, chacun avec une partition incorporant l'invention.

Dans la figure 1 les notes, imprimés avec des lignes continues (9) et des surfaces pleines (10) sont séparées visuellement des autres notes (2) présentés par un grisage. Le grisage est réalisé en ce que les notes (2) sont imprimées avec des lignes interrompues (3), par exemple pointillées, et des surfaces (4) grisées par exemple imprimés par hachurage ou pointillage. Les notes (1) nécessitent une attention spéciale, par exemple du fait qu'elles sont dominantes pour le rythme.

Évidemment la séparation peut être faite à l'inverse, en ce que les notes (2) sont imprimées en plein et les notes (1) sont grisées.

Il est aussi possible d'imprimer les notes (1) avec une couleur différente de la couleur des notes (2), par exemple les notes (1) en noir et les notes (2) en rouge; ou les notes (1) en vert et les notes (2) en jaune.

La fig. 2 montre une autre séparation visuelle en ce que les notes (5) sont imprimées avec des surfaces (6) plus grandes que les surfaces (7) des autres notes (8).

Il est également possible d'imprimer les notes do, ré, mi, fa, sol, la, et si en couleurs différentes, de préférence, respectivement, en vert foncé, vert clair, jaune foncé, jaune clair, rose, bleu foncé et bleu clair.

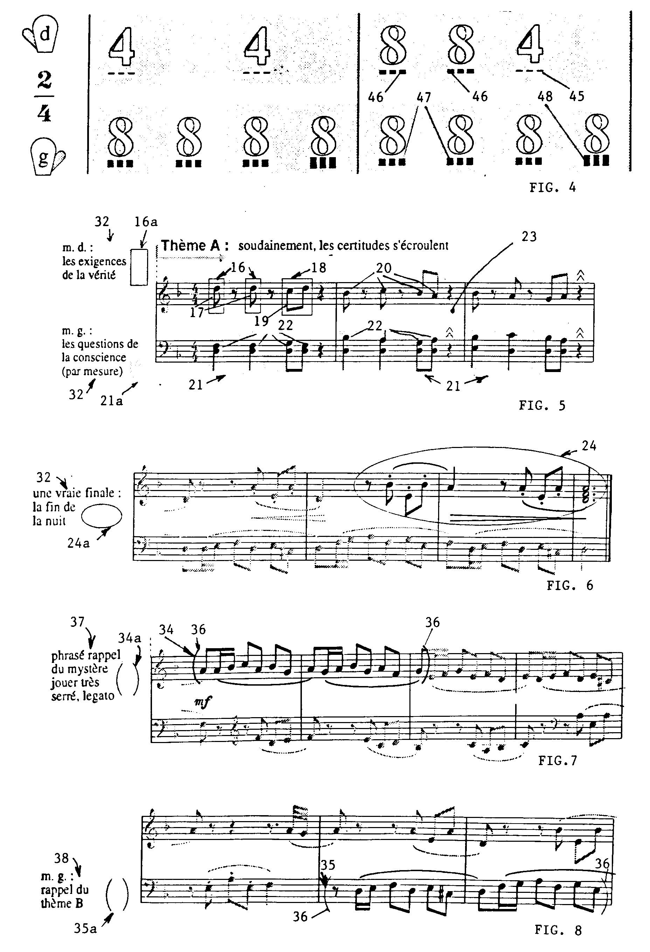

Une autre forme d'écriture musicale est présentée dans les figures 3 et 4. Les notes (11), jouées par la main gauche, sont séparées par grisage des autres notes (12) et (52) jouées par la main droite.

Chacune des notes (11), (52), (12) est représentée sous forme des chiffres 1,2,4 ou 8 désignant la valeur des intervalles entre les notes.

Les chiffres des notes (52) sans lignes (13), (14) sont blancs et ne doivent pas être jouées. Les autres notes (12) sont en couleur.

Les lignes (13) et (14) de la figure 3 donnent une autre séparation visuelle indiquant l'octave concernant la position relative des notes sur le clavier. La ligne (14), la plus épaisse, indique l'octave la plus basse.

La figure 4 montre les lignes (45)-(48) avec quatre épaisseurs différentes, indiquant quatre octaves différentes.

La figure 5 montre des cadres (16) autour des notes (17) et un cadre (18) autour d'un groupe de notes (19). Ces cadres (16) et (18) séparent visuellement les notes (17) et le groupe des notes (19) des autres notes (20).

La séparation visuelle est plus marquante du fait que las notes (20), se trouvant en dehors des cadres (16) et (18), sont imprimées en grisé.

La figure 5 montre aussi des fonds (21) réalisés par grisage dans lesquels des groupes des notes (22) sont présentes. De cette manière chaque groupe de notes (22) est visuellement séparé des autres groupes de notes (22).

Les fonds peuvent être réalisés par des couleurs différentes de la couleur de la surface (23) du tableau supportant la partition de musique.

Le cadre ovale (24) de la fig. 6 sépare visuellement le groupe de notes pros en dedans, des autres notes situées en dehors de ce cadre (24). Ce cadre est utilisé pour indiquer une finale nécessitant un toucher spécial.

La musique des figures 5 et 6 est pourvue d'instructions (32), qui sont, de préférence, données sur le côté à l'aide de graphismes (16a), (21a), (24a) correspondant aux graphismes (16), (21), (24) utilisés dans la partition.

Les cadres (34), (35) des figures 7 et 8 sont formés par deux parenthèses (36) et les instructions (37) et (38) sont écrites avec des graphismes (34a), (35a) correspondant respectivement aux cadres (34) et (35).

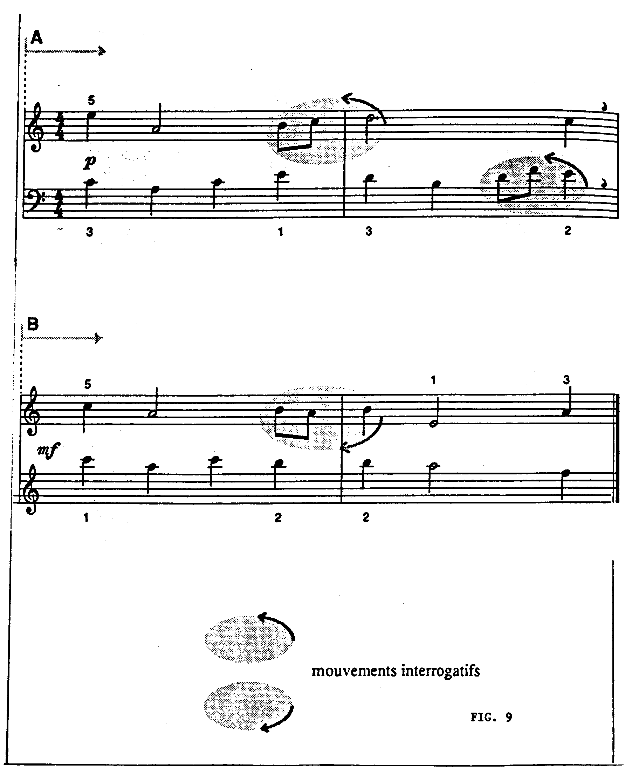

Les figures 9-15 sont des exemples de l'application de l'invention avec différentes variantes utilisées pour séparer visuellement des notes ou groupes de notes les une des autres. Les graphismes correspondant sont utilisés pour relier les informations et / ou instructions aux notes ou groupes de note d séparés.

## Revendications

1. Matériel pour la présentation de la musique caractérisé en ce qu'au moins une partie de la musique est visuellement séparée du reste de celle musique au moyen d'une présentation différente. (fig. 1-15)

2. Matériel selon la revendication 1, caractérisé en ce que des notes sont visuellement séparées des autre par présentation au moyen de lignes d'épaisseurs différentes. (fig. 3-4)

3. Matériel selon la revendication 2, caractérisé en ce que les notes basses sont visuellement séparées des notes plus hautes par présentation de lignes plus épaisses. (fig. 3-4)

4. Matériel selon une des revendications précédentes, caractérisé en ce que toutes les notes: do, ré, mi, fa, sol, la, et si, ont une couleur différente.

5. Matériel selon une des revendications précédentes, caractérisé en ce que les couleurs d'au moins un couple de notes successives sont différentes par différence de teinte, par exemple du plus foncé au plus clair.

6. Matériel selon une des revendications précédentes, caractérisé en ce que des éléments de présentation de la musique sont visuellement séparés des autre par grisage. (fig. 1,3,5-8)

7. Matériel selon une des revendications précédentes, caractérisé en ce que des éléments de présentation de la musique sont visuellement séparés par hachurage des autres éléments de présentation de la musique, imprimés de surfaces pleines. (fig. 1,3,5-8)

8. Matériel selon une des revendications précédentes, caractérisé en ce que des éléments de présentation de la musique sont visuellement séparés, par leur mode d'impression des autres éléments de présentation de la musique, imprimés différemment. (fig. 1,3,5,-8)

9. Matériel selon une des revendications précédentes, caractérisé en ce que des éléments de présentation de la musique sont visuellement séparés par leur grandeur différente. (fig. 2)

10. Matériel selon une des revendications précédentes, caractérisé en ce qui des éléments de présentation de la musique sont visuellement séparés par des auréoles personnalisés. (fig. 12-13)

11. Matériel selon une des revendications précédentes, caractérisé en ce qu'au moins une partie de la partition est séparée visuellement au moyen d'un cadre complet ou incomplet. (fig. 6, 10-13)

12. Matériel selon la revendication 11, caractérisé en ce que plusieurs cadres dont représentés différemment, par exemple par des ligne ininterrompues et des lignes interrompues et / ou des lignes pointillées.(fig. 11)

13. Matériel selon la revendication 12, caractérisé en ce qu'au moins une partie de la partition est séparée au moyen d'un fond différent. (fig. 10, 12-15)

14. Matériel selon la revendication 13, caractérisé en ce que le fond est coloré différemment, hachuré ou pointillé. (fig. 10, 12-15)

15. Matériel selon la revendication 14, caractérisé en ce qu'au moins deux fonds différents ont des formes différentes. (fig. 11-12)

16. Matériel selon une des revendications précédentes, caractérisé en ce qu'au moins une partie de la partition est séparée visuellement au moyen de cadres, dont les lignes inférieures et supérieures sont inclinées. (fig. 15)

17. Matériel selon la revendication 16, caractérisé en ce qu'au moins deux parties de la partition sont séparées visuellement au moyen de cadres, dont les lignes inférieures et supérieures sont inclinées différemment, par exemple un cadre dont les deux lignes sont montantes; un cadre dont les deux lignes sont descendantes et / ou un cadre dont les lignes en inclinaison contraire. (fig. 15)

18. Matériel pour rendre la musique visible, caractérisé en ce que les valeurs des intervalles entre les notes ont été désignés par des chiffres. (fig. 3-4)

19. Matériel selon la revendication 18, caractérisé en ce que les valeurs des notes ont été désignées par les chiffres 1, 2, 4 et 8. (fig. 3-4)

20. Matériel selon la revendication 18 ou 19, caractérisé en ce qu'il comprend des chiffres avec des couleurs différentes, désignent respectivement les notes do, ré, mi, fa, sol, la, si, et do et avec des lignes d'une épaisseur différentes pour désigner l'octave concernée. (fig. 3-4)

21. Matériel selon une des revendications précédentes, caractérisé en ce qu'au moins une note ou un groupe de notes est pourvue d'un graphisme, et que la musique est pourvue d'au moins une instruction reliée au graphisme mentionné. (fig. 5-15)
